(19) Europäisches Patentamt
European Patent Office
Office européen des brevets

(11) **EP 2 462 756 B1**

(12) **EUROPEAN PATENT SPECIFICATION**

(45) Date of publication and mention
of the grant of the patent:
**25.12.2013 Bulletin 2013/52**

(51) Int Cl.:
***H04W 24/02*** (2009.01)

(21) Application number: **09781394.3**

(22) Date of filing: **03.08.2009**

(86) International application number:
**PCT/EP2009/059996**

(87) International publication number:
**WO 2011/015223 (10.02.2011 Gazette 2011/06)**

(54) **REDUCING INTERFERENCE FROM DOMINANT INTERFERING NEIGHBORING BASE STATIONS**

INTERFERENZVERRINGERUNG BEI DOMINANTEN BENACHBARTEN STÖRENDEN BASISSTATIONEN

RÉDUCTION DES INTERFÉRENCES PROVENANT DE STATIONS DE BASE VOISINES DOMINANTES EN INTERFÉRENCE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**13.06.2012 Bulletin 2012/24**

(73) Proprietor: **Nokia Solutions and Networks Oy 02610 Espoo (FI)**

(72) Inventor: **PEDERSEN, Klaus Ingemann DK-9000 Aalborg (DK)**

(74) Representative: **Borgström, Markus et al Nokia Solutions and Networks GmbH & Co. KG CEF T&I IPR / Patent Administration 80240 Munich (DE)**

(56) References cited:
**EP-A1- 1 936 829       US-A1- 2004 190 482
US-A1- 2008 008 147**

- **NOKIA SIEMENS NETWORKS ET AL: "Primary Component Carrier Selection, Monitoring, and Recovery" 3GPP DRAFT; R1-091779, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050339300 [retrieved on 2009-04-28]**
- **"3rd Generation Partnership Project;Technical Specification Group Radio Access Network; Evolved UTRA and UTRAN;Radio Access Architecture and Interfaces (Release 7)" 3GPP DRAFT; TR_R3018_V_100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, 12 October 2007 (2007-10-12) , XP050143278 [retrieved on 2007-10-12]**

EP 2 462 756 B1

## Description

The present application relates to apparatus for communicating. In particular, but not exclusively limited to, the present application relates to apparatus for coordinating communication of base stations in local area cellular communication.

A proposal for LTE-A (Long Term Evolution Advanced) radio systems is autonomous component carrier selection. In such systems, an arrangement of base stations, also referred alternatively as Node B or eNode-B (eNB), in a communication system such as a cellular communication system operate generally without central control. This is described in on-line documents R1-083733 and R1-083103 at http://www.3gpp.org.

An autonomous component carrier selection scheme has been proposed which relies on a concept where each base station automatically selects one of the component carriers as its primary carrier (also sometimes called the base carrier).

One proposal is for each base station to dynamically select additional component carriers or secondary component carriers for transmission/reception.

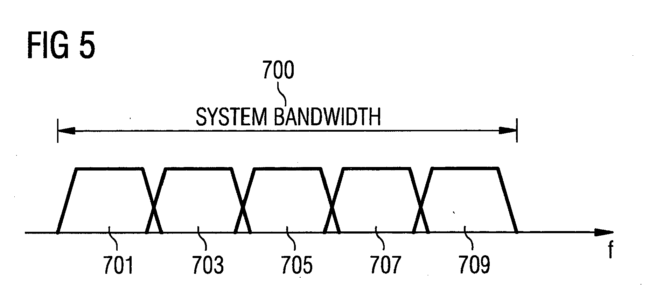

The LTE-A System Bandwidth may be considered to be divided into various component carriers. For example as shown in Figure 5, the system bandwidth 700 can be divided into five component carriers each of which is one fifth of the total system bandwidth. In Figure 5, there is a first component carrier 701, a second component carrier 703, a third component carrier 705, a fourth component carrier 707 and a fifth component carrier 709. In the example shown in Figure 5 where the system bandwidth is 100 MHz, the five component carriers each have a bandwidth of 20 MHz. However, it would be appreciated that other configurations could be implemented dependent on the distribution of carriers and the bandwidth in question. In LTE Release 8, a previous LTE standard, a terminal or user equipment is assumed to be served by a single component carrier while LTE-Advanced terminals can be served simultaneously on multiple component carriers.

Each cell automatically selects one of the component carriers as its primary carrier (which in some implementations is called the base carrier) when the eNB is powered on. The primary carrier is assumed to be used for initial connection of terminals in the cell, hence the primary component carrier may have full control of the common channel cell coverage. Also, depending on the offered traffic in the cell and the mutual interference coupling with the surrounding cells, the transmission and/or reception on all component carriers may not always be the best solution, especially for cell edge users (in other words, user equipment or terminals located in an area roughly equally between two base stations). There has been discussion that each cell can dynamically select additional component carriers for transmission/reception (in other words after having selected the primary component carrier selecting a secondary component carrier).

All component carriers not selected for primary or secondary use by a base station may be then be assumed to be completely muted (both for uplink and downlink) and are not used by the cell.

These schemes are implemented totally within the cell and therefore there is no need for a centralised network control. However, once a new eNB has selected its primary component carrier and has started transmitting on that carrier, it may experience interference where the quality of the primary component carrier degrades both in quality and coverage as neighbouring eNB use the new eNB primary component carrier as their secondary component carriers.

Currently there are two actions which this new eNB may take to improve its situation. Firstly, the new eNB may select a new component carrier for its primary carrier. However, this may result in network disruption problems in that by switching primary carrier, this new primary carrier may itself interfere with other eNB primary component carriers and may therefore cause a chain of reselections to occur which may result in dropped calls or large amounts of signalling having to be carried out between the eNBs switching primary component carriers and the user equipment they communicate with.

Secondly, the new eNB may attempt to reduce the interference on the primary component carrier by signalling to the neighbouring eNBs that there is a problem. For example the new eNB may send an interference reduction request message to all of the neighbouring eNBs. Cells or the neighbouring eNBs receiving the interference reduction request (IRR) and having selected the same component carrier may then react by reducing the interference. The neighbouring eNBs may reduce the interference in different ways depending on whether the interference is occurring on the uplink or downlink. The IRR message may therefore include information on whether the primary component carrier quality problem is experienced in the uplink or in the downlink. For example where the IRR is for the downlink, neighbouring eNBs may simply reduce the transmit power of the interfering particular component carrier.

However, by transmitting an interference reduction request message to all of the neighbouring eNBs, a significant amount of signalling must occur. Furthermore where for example the IRR received and the transmit power of the interfering component carrier is reduced by the neighbouring eNB it would be expected that the terminals using the neighbouring eNB component carrier would suffer a loss in quality of signal and may also suffer dropped calls. However it would be understood that where a neighbouring eNB is using the component carrier also used as the primary component carrier for the new eNB but where the interference generated is small, the positive effect of small improvement to the new eNB communications would be significantly outweighed by the negative effect of the neighbouring eNB communications degradation.

3GPP TSG RAN WG1 #57 meeting R1-091779 discusses initial selection of primary component carrier as well as how to monitor the quality of the primary carrier and recovery actions for improving the quality of the primary component carrier. In particular, interfering neighbouring base stations are determined by an eNB, and the eNB transmits or broadcasts an Interference Reduction Request message to the interfering base station(s) to reduce interference.

3GPP TR R3.018 V1.0.0 (2007-10) discusses evolved UTRA and UTRAN radio access architecture interfaces; section 6.12.5.3.2 discloses an explicit mute request between eNodeB's to reduce interference therebetween.

According to a first aspect of the invention there is provided a method comprising determining an interfering neighbouring base station group dependent on an associated neighbouring base station interference parameter value; wherein the interfering group comprises at least two neighbouring base stations with combined respective interference parameter values greater than a threshold value; and generating an interference reduction request for the interfering neighbouring base stations of said group.

The method may further comprise: transmitting the interference reduction request to the interfering neighbouring base stations of said group.

The interference parameter value may comprise at least one of: a path gain parameter between a neighbouring base station and a measuring base station; a received interference power parameter; a component carrier measurement from a terminal; and a background interference matrix value.

The interference parameter may comprise a path gain parameter of a neighbouring base station multiplied by the transmit power of the neighbouring base station.

The method may comprise, prior to determining the interfering neighbouring base station group, determining a degradation in quality of a base station primary component carrier channel.

The method may further comprise: determining the interfering neighbouring base station group dependent on an associated neighbouring base station interference parameter value for neighbouring base stations operating on the base station primary component carrier channel.

According to a second aspect of the invention there is provided an apparatus comprising a monitor configured to determine an interfering neighbouring base station group neighbouring base station interference parameter value; wherein the interfering group comprises at least two neighbouring base stations with combined respective interference parameter values greater than a threshold value; and a generator configured to generate an interference reduction request for the interfering neighbouring base stations of said group.

The apparatus may further comprise: a transmitter configured to transmit the interference reduction request to the interfering neighbouring base stations of said group.

The neighbouring base station monitor interference parameter value may comprise at least one of: a path gain parameter between a neighbouring base station and the apparatus; a received interference power parameter; a component carrier measurement from a terminal; and a background interference matrix value.

The neighbouring base station monitor interference parameter value may comprise a path gain parameter of a neighbouring base station multiplied by the transmit power of the neighbouring base station.

The monitor may comprise: a primary carrier channel monitor configured to monitor the apparatus' primary carrier channel quality, wherein the primary carrier channel monitor is configured to determine an interfering neighbouring base station group dependent on an associated neighbouring base station interference parameter value when the primary channel monitor determines a degradation in quality of a base station primary component carrier channel.

The monitor is preferably further configured to determine the interfering neighbouring base station group dependent on an associated at least one neighbouring base station interference parameter value for neighbouring base stations operating on the base station primary component carrier channel.

According to a third aspect of the invention there is provided a computer-readable medium encoded with instructions that, when executed by a computer, perform determining an interfering neighbouring base station group dependent on an associated at least one neighbouring base station interference parameter value; wherein the interfering group comprises at least two neighbouring base stations with combined respective interference parameter values greater than a threshold value; and generating an interference reduction request for the dominant interfering neighbouring base stations of said group.

An electronic device may comprise an apparatus as described above.

A chipset may be configured to perform the operations as described above.

A base station may comprise an apparatus as described above.

For a better understanding of the present invention and as to how the same may be carried into effect, reference will now be made by way of example only to the accompanying drawings in which:

Figure 1 shows a schematic representation of an LTE system;
Figure 2 shows a schematic view of a base station used in the LTE system of Figure 1;
Figure 3 shows in further detail the base station of Figure 2 according to embodiments of the application;
Figure 4 shows a flow diagram of a method of operating a base station according to embodiments of the application; and

Figure 5 shows the frequency distribution of an example LTE system bandwidth.

The present application is described herein with reference to particular illustrative embodiments. However, such embodiments are presented for the purposes of illustrating the present application, and do not limit the scope of the invention.

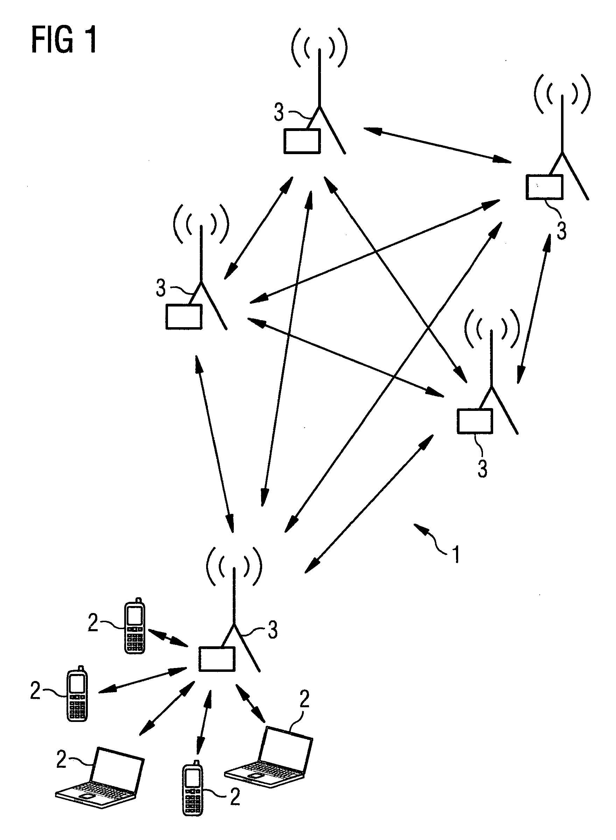

Figure 1 shows a communication system 1 providing wireless communications to a plurality of communication devices 2. Each communication device 2, for example a user equipment, is used for accessing various services and/or applications provided via the wireless communication system. The communication device 2 typically accesses wirelessly a communication system via at least one wireless transmitter and/or receiver of an apparatus which may be suitable for accessing a communications system such as a base station 3 of an access system.

The user equipment 2 and base stations 3 communicate according to an appropriate radio access technology or technologies. Access is provided via radio channels also known as access channels. Each user equipment 2 may have one or more radio channels open at the same time. Furthermore, one or more user equipment 2 may be connected wirelessly to more than one base station 3 or similar entity. One or more user equipment 2 may also share a channel.

The base station 3 is connected to other parts of the communication system 1 via appropriate connections, by one or more appropriate gateway nodes (not shown).

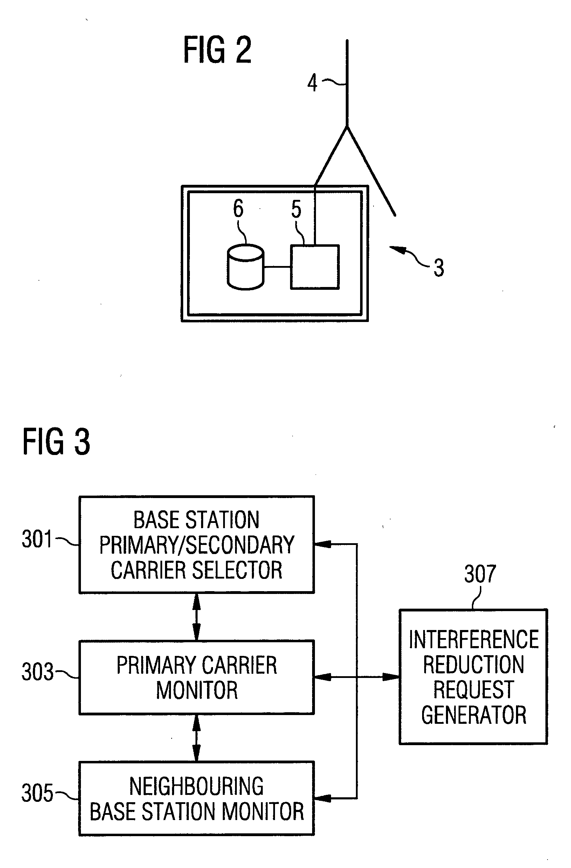

Figure 2 shows a base station of the system of figure 1 in more detail. Figure 2 shows exemplary architecture of the base station and the embodiments described hereinafter may comprise other arrangements and architectures. For example, the user device may communicate with a different access system.

The base station 3 has an antenna 4 for communicating with the communication devices or user equipment 2 via a wireless link. The base station 3 has a data processing entity 5 for carrying out various processes. Such processes may include some embodiments of the invention. Additionally a memory 6 is provided which stores information which is used by the base station 3. Although the following embodiments are described with respect to a LTE communications system it would be understood that the apparatus which is in some embodiments a base station and method of operating the apparatus according to some embodiments may be implemented in any suitable communications systems.

Some embodiments utilise a long term evolution (LTE) radio system. The long term evolution (LTE) is a system which provides an evolved radio access system that is connected to a packet data system. Such an access system may be provided, for example, based on architecture from the Evolved Universal Terrestrial Radio Access (E-UTRA) and based on use of the Evolved Universal Terrestrial Radio Access Networks (E-UTRAN) Node Bs (eNode Bs). An Evolved Universal Terrestrial Radio Access Network (E-UTRAN) consists of E-UTRAN Node Bs (eNode-Bs) which are configured to provide base station and control functionalities. For example, the eNode-Bs can provide independently radio access network features such as user plane radio link control/medium access control/physical layer protocol (RLC/MAC/PHY) and control plane radio resource control (RRC) protocol terminations towards the user devices.

Hereinafter the term "base station" is used throughout the description. The term base station refers to any suitable access node or apparatus. For example, non-limiting examples of access nodes in some embodiments are a base station of a cellular system, for example a 3G WCDMA Node B or eNode-B, a base station of a wireless local area network (WLAN), a satellite station of a satellite based communication system and other access points.

Figure 1 further shows a schematic example of a particular type of autonomous cellular communication system which uses the communication method according to some embodiments. The autonomous system or network includes a plurality of base stations 3. The base stations 3 are configured to communicate and serve user equipment, such as mobile telephones 2 in their respective cells. The base stations 3 communicate with each other via over the air communication (OTAC).

Typically, the arrangement of base stations as shown in figure 1 operates in both FDD and TDD mode, and is used in local area environments such as indoor scenarios, and outdoor hot-spot areas with dense deployment of pico/micro cells. However the invention and embodiments are not limited to these local area environments.

In the arrangement as shown in figure 1, the LTE-Advanced system bandwidth consists of a number of separate component carriers. For example figure 1 shows five base stations 3. As described previously typically an arrangement as shown in figure 1 may have a 100 MHz system bandwidth with five component carriers of 20 MHz. In one bandwidth configuration the five component carriers have a 20 MHz bandwidth. In this way, each of the five base stations 3 shown in figure 1 will have selected different component carriers for their primary component carriers as described below.

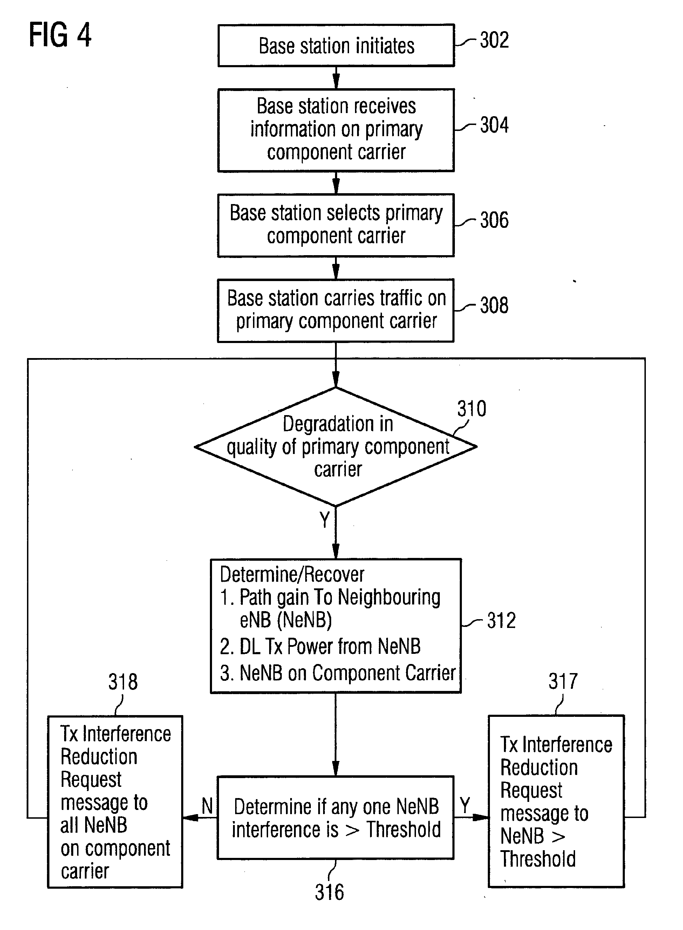

It would be appreciated that the schematic structures described in Figure 3 and the method steps in Figure 4 represent only a part of the operation of a complete system comprising some embodiments of the application as shown implemented in the apparatus shown in figure 2.

With respect to Figure 3, a schematic structure diagram of the base station 3 as seen in Figure 2 is shown. The base station 3 comprises a base station primary/secondary carrier selector 301, a primary carrier monitor 303, a neighbouring base station monitor 305 and an interference reduction request generator 307. In some embodiments, the modules or parts represent processors or parts of a single processor configured to carry out the processes described below, which are located in the same, or different chip sets. Alternatively the processing means 5 is configured to carry out all of the processes and Figure 3 exemplifies the processing and controlling of the base station with respect to identifying dominant interference sources for sending interference reduction requests.

The arrangement of base stations as shown in Figure 1 may employ an autonomous eNode-B component carrier selection method for LTE-Advanced Communications Systems. The autonomous eNode-B component carrier selection and monitoring is shown in Figure 4.

The base station primary/secondary carrier selector 301 may therefore initiate the autonomous primary carrier selection routine when switched on, the base station 3 forms an initiation operation. This initiation operation is shown in Figure 4 by step 302.

The base station primary/secondary carrier selector 301 may then select one of the component carriers, for example as shown in Figure 5 one of the five component carriers, from the total bandwidth for the LTE system. The primary carrier selection may be carried out according to any suitable primary carrier selection method known. For example, the base station primary/secondary carrier selector 301 may initially receive information on primary component carrier distribution. In some embodiments, the base station primary/secondary carrier selector 301, further receives information relating to the neighbouring base stations, for example local base station power strength measurements or uplink received interference measurements for each carrier from neighbouring active base stations on which component carriers neighbouring base stations have already selected.

The reception of this information on primary component carriers from neighbouring base stations is shown in Figure 4 by step 304.

The primary carrier selector 301 then makes a decision to select one of the primary component carriers based on this received information. The selection of the primary component carrier by the base station primary/secondary carrier selector 301 is shown in Figure 4 by step 306.

As the primary/base carrier is assumed to be used for the initial connection of the terminals (user equipment) in the cell, a user equipment 2 cannot connect to the base station 3 before the primary component carrier has been selected, and no signals are transmitted from the base station either.

Once the base station 3 has selected its primary component carrier, the base station 3 starts to carry traffic as shown in step 308 of Figure 4.

The quality of the primary component carrier may be hereafter monitored by the base station in the primary carrier monitor 303. If the quality of the primary component carrier is degraded as detected by the primary carrier monitor 303, then an interference reduction request operation may be initialised.

For example, the primary carrier monitor 303 may signal to the interference reduction request generator 307 that an interference reduction request is to be generated and to the neighbouring base station monitor 305 to determine if there are dominant interference sources and the details on the dominant interference sources to be included in the interference reduction request. The operation of detecting the degradation in quality of the primary component carrier is shown in Figure 4 by step 310.

Examples of degradation of the primary carrier monitor as indicated previously may occur when neighbouring base stations select a secondary carrier which is used by the present base station as its primary carrier. In other embodiments, a degradation in quality of the primary component carrier may occur due to environmental conditions where, for example the removal or introduction of a large temporary structure changes the signal path between neighbouring base stations.

The neighbouring base station monitor 305 may in some embodiments monitor the neighbouring base stations in parallel with the primary carrier monitor 303 monitoring the present base station primary carrier. In some other embodiments as indicated above the neighbouring base station monitor 305 may monitor in response to a signal to start monitoring, for example, a signal issued by the primary carrier monitor 303 when detecting that the quality of the primary carrier has degraded. In some embodiments the primary carrier monitor 303 and neighbouring base station monitor 305 functions may be implemented in the same functional or structural element.

For example, the neighbouring base station monitor 305 may monitor the neighbouring base stations for the path loss of their reference signal received power (RSRP). The reference signal received power (RSRP) enables the neighbouring base station monitor 305 to monitor the potential interference based on the knowledge that a signal transmitted by a neighbouring base station would produce a interference dependent in the power of the signal received by the present base station given the power of the signal transmitted from the neighbouring base station.

The neighbouring base station monitor 305, in some embodiments, may monitor the neighbouring base station primary component carrier. Furthermore the neighbouring base station monitor 305 may also determine the downlink transmit power at the neighbouring base station on the primary carrier in order to determine the path loss for the primary carrier between the neighbouring base station and the present base station. Furthermore in some embodiments, the neighbouring base station monitor 305 further determines which of the neighbouring base stations have selected the present base station primary component carrier for transmission (either as a neighbouring base station secondary carrier or a primary carrier).

The determination or recovery of this information is shown in Figure 4 by step 312.

The neighbouring base station monitor 305 may in some embodiments determine an approximate total interference generated for the base station experiencing the primary component carrier quality degradation. The neighbouring base station monitor 305 may thus calculate the approximate total interference using the following equation:

$$I_{tot} = \sum_n H_n P_n \; .$$

where $H_n$ is the path gain for the signal received from the neighbouring base station for the n'th base station and $P_n$ is the corresponding transmit power at the n'th neighbouring base station.

The neighbouring base station monitor 305 may then determine if any one of the neighbouring base stations has an interference level which is dominant by determining if there is an interference level greater than a specific threshold. For example, the neighbouring base station monitor 305 may apply the following condition:

$$\frac{Max\{H_n P_n\}}{I_{tot}} > TH \; ,$$

where $TH$ is the threshold parameter. The threshold parameter TH expresses how high the generated interference from the largest interference base station is before it is determined to be a dominant base station interferer over the total interference.

The determination of whether or not any one base station is dominant in terms of interference generation, in other words is any one neighbouring base station generating an interference level greater than the threshold interference value is shown in Figure 4 by step 316.

If a dominant interfering neighbouring base station is determined, in other words the condition is determined to be true, the neighbouring base station monitor 305 may signal to the interference reduction request generator 307 that there is a dominant interference base station.

The interference reduction request generator 307 may then having received an request to generate a request from the primary carrier monitor and information identifying a dominant interfering neighbouring base station generate and transmit an interference reduction request message to the identified base station. In some embodiments therefore only when a detected dominant interfering base station is determined then only the dominant interfering base station is sent an interference reduction request. The neighbouring base station having received this request may then use it to attempt to reduce the interference.

As in some embodiments the interference reduction request (IIR) is sent to only one and not all of the cells, only the cell generating the dominant interference values is affected and only the calls within the dominant interference cell which receives the interference reduction request would suffer in a reduction in quality. Thus by only sending the IRR to only one cell, there is a minimisation to the overall influence on the network and also there is a reduction of unnecessary signalling between base stations which increases the overall network performance efficiency.

The handling of a dominant interfering neighbouring base station is shown in Figure 4 by step 317.

Where the neighbouring eNB monitor 305 does not detect a dominant neighbouring base station, in other words that there is not one neighbouring base station with an interference value greater than the threshold, the interference reduction request generator 307 may receive from the neighbouring base station monitor 305, a signal indicating that there is no dominant interferer and the base stations and information on these base stations. The interference reduction request generator 307 may therefore generate in some embodiments an interference reduction request to all of the neighbouring base stations which operate on the primary component carrier of the present base station. The neighbouring base stations which receive the IIR may then perform interference reduction operations according to any suitable manner.

The handling of non-dominant interfering neighbouring base stations is shown in Figure 4 by step 318.

In summary at least some embodiments may be described as apparatus comprising: a monitor configured to determine at least one dominant interfering neighbouring base station dependent on an associated at least one neighbouring base station interference parameter value; and a generator configured to generate at least one interference reduction request for the at least one dominant interfering neighbouring base station.

Thus although there is no single dominant neighbouring base station to which the interference may be reduced by reducing this power on that neighbouring base station alone, it is possible to reduce the degradation of the quality of the primary component carrier in the present base station by reducing the neighbouring base stations using the component carrier.

In some other embodiments rather than determining if there is a single dominant interfering neighbouring base station more than one interfering neighbouring base station may be determined to be part of a dominant group or set of interfering neighbouring base stations. In these embodiments the members of the dominant group may be identified by the neighbouring base station monitor and the interference reduction request generator may generate interference reduction requests to each of the members of the group.

In some of these embodiments the dominant group may be identified by ranking the neighbouring base stations based on the interference levels of each neighbouring base station.

In such embodiments the highest interfering base stations are then determined to be members of the dominant group. In some embodiments the determination selects the m'th highest interfering neighbouring base stations. In these embodiments the value of m may be predetermined or may by chosen in response to the radio environment.

In further dominant group embodiments the determination selects the i'th highest interfering neighbouring base stations until the total interference generated by the i neighbouring base stations is greater than a predetermined fraction of the interference generated from all of the neighbouring base stations. For example the predetermined fraction may be 50% of the total interference so that the i-1'th highest interfering neighbouring base stations have a accumulated interference level of less than 50% of the total interference but the i'th highest interfering neighbouring base stations have an accumulated interference level of 50% or more of the total interference levels.

In some other dominant group embodiments, the neighbouring base station monitor 305 selects the neighbouring base stations as being members of the dominant group where the interference level from the neighbouring base station is greater than a predetermined threshold. For example if a neighbouring base station generates more than 35% of the received interference then it is determined to be one of the dominant set of interfering neighbouring base stations.

Although the above embodiments have been described with regards interference noted by path gain between the neighbouring base stations and the present base station, other forms of interference parameters may be used in other embodiments. For example, in some embodiments, measurements for monitoring the quality of the primary component carrier may include received interference power (RIP), measurements from terminals served on the primary component carrier such as reference signal received power and reference signal received quality. In other embodiments the interference determination values may be based on background interference matrix (BIM) values where the carrier to interference value is used by the primary carrier monitor 303 and the neighbouring base station monitor 305 determine if one, more than one, or all of the neighbouring base stations on the component carrier are to receive an interference reduction request generator.

At least some embodiments are in summary a method comprising: determining at least one dominant interfering neighbouring base station dependent on an associated at least one neighbouring base station interference parameter value; and generating at least one interference reduction request for the at least one dominant interfering neighbouring base station.

Furthermore in such embodiments there may be an apparatus comprising at least one processor and at least one memory including computer program code the at least one memory and the computer program code configured to with the at least one processor, cause the apparatus at least to perform the above method.

It is noted that the embodiments of the invention and functionality may be provided according to some embodiments of the invention by a separate component to the data processing entity. In some embodiments the functionality of the methods according to some embodiments of the invention are carried out by other parts of a system separate from the base station. For example in an embodiment the functionality may be carried out by network controllers.

The present invention is described herein with reference to examples of preferred embodiments for the purpose of illustration, and is not limited to any such embodiments. The scope of the present invention is defined by the appended claims.

It shall be appreciated that the term user equipment is intended to cover any suitable type of wireless user equipment, such as mobile telephones, portable data processing devices or portable web browsers.

Furthermore elements of a public land mobile network (PLMN) may also comprise apparatus as described above.

In general, the various embodiments described above may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of the application may be implemented by computer software executable by a data processor, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example digital versatile disc (DVD), compact discs (CD) and the data variants thereof both.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

For example the present invention may be applied to base stations other than eNode-Bs.

However, all such and similar modifications of the teachings of this invention will still fall within the scope of this invention as defined in the appended claims.

As used in this application, the term circuitry may refer to all of the following: (a) hardware-only circuit implementations (such as implementations in only analogue and/or digital circuitry) and (b) to combinations of circuits and software (and/or firmware), such as and where applicable: (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of circuitry applies to all uses of this term in this application, including in any claims. As a further example, as used in this application, the term circuitry would also cover an implementation of merely a processor (or multiple processors) or portion of a processor and its (or their) accompanying software and/or firmware. The term circuitry would also cover, for example and if applicable to the particular claim element, a baseband integrated circuit or applications processor integrated circuit for a mobile phone or a similar integrated circuit in server, a cellular network device, or other network device.

The term processor and memory may comprise but are not limited to in this application: (1) one or more microprocessors, (2) one or more processor(s) with accompanying digital signal processor(s), (3) one or more processor(s) without accompanying digital signal processor(s), (3) one or more special-purpose computer chips, (4) one or more field-programmable gate arrays (FPGAS), (5) one or more controllers, (6) one or more application-specific integrated circuits (ASICS), or detector(s), processor(s) (including dual-core and multiple-core processors), digital signal processor(s), controller(s), receiver, transmitter, encoder, decoder, memory (and memories), software, firmware, RAM, ROM, display, user interface, display circuitry, user interface circuitry, user interface software, display software, circuit(s), antenna, antenna circuitry, and circuitry.

**Claims**

1. A method comprising:

   determining (316) an interfering neighbouring base station group dependent on an associated neighbouring base station interference parameter value; **characterised in that** the interfering group comprises at least two neighbouring base stations with combined respective interference parameter values greater than a threshold value; and
   generating (317) an interference reduction request for the interfering neighbouring base stations of said group.

2. The method as claimed in claim 1, further comprising:

   transmitting the interference reduction request to the interfering neighbouring base stations of said group.

3. The method as claimed in claim 1, wherein the interference parameter value comprises at least one of:

> a path gain parameter between a neighbouring base station and a measuring base station;
> a received interference power parameter;
> a component carrier measurement from a terminal; and
> a background interference matrix value.

4. The method as claimed in claims 1 to 2, wherein the interference parameter comprises a path gain parameter of a neighbouring base station multiplied by the transmit power of the neighbouring base station.

5. The method as claimed in claims 1 to 4, comprising prior to determining the interfering neighbouring base station group;
determining a degradation in quality of a base station primary component carrier channel.

6. The method as claimed in claim 5, further comprising:

> determining the interfering neighbouring base station group dependent on an associated neighbouring base station interference parameter value for neighbouring base stations operating on the base station primary component carrier channel.

7. An apparatus comprising:

> a monitor (303,305) configured to determine an interfering neighbouring base station group dependent on an associated neighbouring base station interference parameter value; **characterised in that** the interfering group comprises at least two neighbouring base stations with combined respective interference parameter values greater than a threshold value; and
> a generator (307) configured to generate an interference reduction request for the interfering neighbouring base stations of said group.

8. The apparatus as claimed in claim 7, further comprising:

> a transmitter configured to transmit the interference reduction request to the interfering neighbouring base stations of said group.

9. The apparatus as claimed in claim 7, wherein the neighbouring base station monitor interference parameter value comprises at least one of:

> a path gain parameter between a neighbouring base station and the apparatus;
a received interference power parameter;
a component carrier measurement from a terminal; and
a background interference matrix value.

10. The apparatus as claimed in claims 7 to 8, wherein the neighbouring base station monitor interference parameter value comprises a path gain parameter of a neighbouring base station multiplied by the transmit power of the neighbouring base station.

11. The apparatus as claimed in claims 7 to 10, wherein the monitor comprises;
a primary carrier channel monitor configured to monitor the apparatus' primary carrier channel quality, wherein the primary carrier channel monitor is configured to determine an interfering neighbouring base station group dependent on an associated neighbouring base station interference parameter value when the primary channel monitor determines a degradation in quality of a base station primary component carrier channel.

12. The apparatus as claimed in claim 11, wherein the monitor is further configured to determine the interfering neighbouring base station group dependent on an associated at least one neighbouring base station interference parameter value for neighbouring base stations operating on the base station primary component carrier channel.

13. A computer-readable medium encoded with instructions that, when executed by a computer, perform:

> determining (316) an interfering neighbouring base station group dependent on an associated neighbouring base station interference parameter value; **characterised in that** the interfering group comprises at least two neighbouring base stations with combined respective interference parameter values greater than a threshold value; and
> generating (317) an interference reduction request for the interfering neighbouring base stations of said group.

14. An electronic device comprising an apparatus as claimed in any of the claims 7 to 12.

15. A chipset configured to perform the functions of any of the claims 1 to 6.

16. A base station comprising an apparatus as claimed in claims 7 to 12.

**Patentansprüche**

1. Verfahren, umfassend:

   Bestimmen (316) einer störenden benachbarten Basisstationsgruppe in Abhängigkeit von einem Interferenzparameterwert einer zugehörigen benachbarten Basisstation; **dadurch gekennzeichnet, dass** die störende Gruppe mindestens zwei benachbarte Basisstationen mit kombinierten jeweiligen Interferenzparameterwerten größer als ein Schwellwert umfasst; und Erzeugen (317) einer Interferenzverringerungsanforderung für die störenden benachbarten Basisstationen dieser Gruppe.

2. Verfahren nach Anspruch 1, weiterhin umfassend:

   Übertragen der Interferenzverringerungsanforderung zu den störenden benachbarten Basisstationen dieser Gruppe.

3. Verfahren nach Anspruch 1, wobei der Interferenzparameterwert mindestens einen der folgenden umfasst:

   einen Streckengewinnparameter zwischen einer benachbarten Basisstation und einer messenden Basisstation;
   einen empfangenen Interferenzleistungsparameter;
   eine Komponententrägermessung von einem Endgerät; und
   einen Hintergrundinterferenzmatrixwert.

4. Verfahren nach Anspruch 1 bis 2, wobei der Interferenzparameter einen Streckengewinnparameter einer benachbarten Basisstation multipliziert mit der Sendeleistung der benachbarten Basisstation umfasst.

5. Verfahren nach Ansprüchen 1 bis 4, umfassend vor Bestimmen der störenden benachbarten Basisstationsgruppe;
   Bestimmen einer Güteminderung eines primären Komponententrägerkanals einer Basisstation.

6. Verfahren nach Anspruch 5, weiterhin umfassend:

   Bestimmen der störenden benachbarten Basisstationsgruppe in Abhängigkeit von einem Interferenzparameterwert einer zugehörigen benachbarten Basisstation für auf dem primären Komponententrägerkanal der Basisstation arbeitende benachbarte Basisstationen.

7. Einrichtung, umfassend:

   einen Monitor (303, 305), eingerichtet zum Bestimmen einer störenden benachbarten Basisstationsgruppe in Abhängigkeit von einem Interferenzparameterwert einer zugehörigen benachbarten Basisstation; **dadurch gekennzeichnet, dass** die störende Gruppe mindestens zwei benachbarte Basisstationen mit kombinierten jeweiligen Interferenzparameterwerten größer als ein Schwellwert umfasst; und einen Generator (307), eingerichtet zum Erzeugen einer Interferenzverringerungsanforderung für die störenden benachbarten Basisstationen dieser Gruppe.

8. Einrichtung nach Anspruch 7, weiterhin umfassend:

   einen Sender eingerichtet zum Senden der Interferenzverringerungsanforderung an die störenden benachbarten Basisstationen dieser Gruppe.

9. Einrichtung nach Anspruch 7, wobei der Inteferenzparameterwert des Monitors der benachbarten Basisstation mindestens einen der folgenden umfasst:

   einen Streckengewinnparameter zwischen einer benachbarten Basisstation und der Einrichtung;
   einen empfangenen Interferenzleistungsparameter;
   eine Komponententrägermessung von einem Endgerät; und
   einen Hintergrundinterferenzmatrixwert.

10. Einrichtung nach Ansprüchen 7 bis 8, wobei der Interferenzparameterwert des Monitors der benachbarten Basisstation einen Streckengewinnparameter einer benachbarten Basisstation multipliziert mit der Sendeleistung der benachbarten Basisstation umfasst.

11. Einrichtung nach Ansprüchen 7 bis 10, wobei der Monitor Folgendes umfasst:

    einen Primärträgerkanalmonitor, eingerichtet zum Überwachen der Primärträgerkanalgüte der Einrichtung, wobei der Primärträgerkanalmonitor eingerichtet ist zum Bestimmen einer störenden benachbarten Basisstationsgruppe in Abhängigkeit von einem Interferenzparameterwert einer zugehörigen benachbarten Basisstation, wenn der Primärkanalmonitor eine Güteminderung eines Primärkomponententrägerkanals der Basisstation bestimmt.

12. Einrichtung nach Anspruch 11, wobei der Monitor weiterhin eingerichtet ist zum Bestimmen der störenden benachbarten Basisstationsgruppe in Abhängigkeit von einem Interferenzparameterwert einer zugehörigen mindestens einen benachbarten Basisstation für benachbarte Basisstationen, die auf dem Primärkomponententrägerkanal der Basisstation arbeiten.

13. Computerlesbares Medium codiert mit Anweisungen, die bei Ausführung auf einem Computer Folgendes durchführen:

Bestimmen (316) einer störenden benachbarten Basisstationsgruppe in Abhängigkeit von einem Interferenzparameterwert einer zugehörigen benachbarten Basisstation; **dadurch gekennzeichnet, dass** die störende Gruppe mindestens zwei benachbarte Basisstationen mit kombinierten jeweiligen Interferenzparameterwerten größer als ein Schwellwert umfasst; und Erzeugen (317) einer Interferenzverringerungsanforderung für die störenden benachbarten Basisstationen dieser Gruppe.

14. Elektronische Vorrichtung, umfassend eine Einrichtung nach einem beliebigen der Ansprüche 7 bis 12.

15. Chipsatz, eingerichtet zum Durchführen der Funktionen eines beliebigen der Ansprüche 1 bis 6.

16. Basisstation, umfassend eine Einrichtung nach Ansprüchen 7 bis 12.

## Revendications

1. Un procédé comprenant :

la détermination (316) d'un groupe de stations de base voisines brouilleuses dépendant d'une valeur de paramètre de brouillage de station de base voisine associée, **caractérisé en ce que** le groupe brouilleur comprend au moins deux stations de base voisines avec des valeurs de paramètre de brouillage respectives combinées supérieures à une valeur seuil, et la génération (317) d'une demande de réduction de brouillage pour les stations de base voisines brouilleuses dudit groupe.

2. Le procédé selon la revendication 1, comprenant en outre :

la transmission de la demande de réduction de brouillage aux stations de base voisines brouilleuses dudit groupe.

3. Le procédé selon la revendication 1, dans lequel la valeur de paramètre de brouillage comprend au moins un élément parmi :

un paramètre de gain de trajet entre une station de base voisine et une station de base de mesure, un paramètre de puissance de brouillage reçue, une mesure de porteuse de composant provenant d'un terminal, et une valeur matricielle de brouillage d'arrière-plan.

4. Le procédé selon l'une quelconque des revendications 1 ou 2, dans lequel le paramètre de brouillage comprend un paramètre de gain de trajet d'une station de base voisine multiplié par la puissance d'émission de la station de base voisine.

5. Le procédé selon l'une quelconque des revendications 1 à 4, comprenant, avant la détermination du groupe de stations de base voisines brouilleuses, la détermination d'une dégradation en qualité d'un canal de porteuse de composant primaire de station de base.

6. Le procédé selon la revendication 5, comprenant en outre :

la détermination du groupe de stations de base voisines brouilleuses dépendant d'une valeur de paramètre de brouillage de station de base voisine associée pour des stations de base voisines fonctionnant sur le canal de porteuse de composant primaire de station de base.

7. Un appareil comprenant :

un dispositif de surveillance (303, 305) configuré de façon à déterminer un groupe de stations de base voisines brouilleuses dépendant d'une valeur de paramètre de brouillage de station de base voisine associée, **caractérisé en ce que** le groupe brouilleur comprend au moins deux stations de base voisines avec des valeurs de paramètre de brouillage respectives combinées supérieures à une valeur seuil, et un générateur (307) configuré de façon à générer une demande de réduction de brouillage pour les stations de base voisines brouilleuses dudit groupe.

8. L'appareil selon la revendication 7, comprenant en outre :

un émetteur configuré de façon à transmettre la demande de réduction de brouillage aux stations de base voisines brouilleuses dudit groupe.

9. L'appareil selon la revendication 7, dans lequel la valeur de paramètre de brouillage de dispositif de surveillance de station de base voisine comprend au moins un élément parmi :

un paramètre de gain de trajet entre une station de base voisine et l'appareil,
un paramètre de puissance de brouillage reçue,
une mesure de porteuse de composant provenant d'un terminal, et
une valeur matricielle de brouillage d'arrière-plan.

10. L'appareil selon l'une quelconque des revendications 7 à 8, dans lequel la valeur de paramètre de brouillage de dispositif de surveillance de station de base voisine comprend un paramètre de gain de trajet d'une station de base voisine multiplié par la puissance d'émission de la station de base voisine.

11. L'appareil selon l'une quelconque des revendications 7 à 10, dans lequel le dispositif de surveillance comprend :

un dispositif de surveillance de canal de porteuse primaire configuré de façon à surveiller la qualité du canal de porteuse primaire de l'appareil, dans lequel le dispositif de surveillance de canal de porteuse primaire est configuré de façon à déterminer un groupe de stations de base voisines brouilleuses dépendant d'une valeur de paramètre de brouillage de station de base voisine associée lorsque le dispositif de surveillance de canal primaire détermine une dégradation en qualité d'un canal de porteuse de composant primaire de station de base.

12. L'appareil selon la revendication 11, dans lequel le dispositif de surveillance est configuré en outre de façon à déterminer le groupe de stations de base voisines brouilleuses dépendant d'au moins une valeur de paramètre de brouillage de station de base voisine associée pour des stations de base voisines fonctionnant sur le canal de porteuse de composant primaire de station de base.

13. Un support lisible par ordinateur codé avec des instructions qui, lorsqu'elles sont exécutées par un ordinateur, effectuent :

la détermination (316) d'un groupe de stations de base voisines brouilleuses dépendant d'une valeur de paramètre de brouillage de station de base voisine associée, **caractérisé en ce que** le groupe brouilleur comprend au moins deux stations de base voisines avec des valeurs de paramètre de brouillage respectives combinées supérieures à une valeur seuil, et
la génération (317) d'une demande de réduction de brouillage pour les stations de base voisines brouilleuses dudit groupe.

14. Un dispositif électronique comprenant un appareil selon l'une quelconque des revendications 7 à 12.

15. Un jeu de puces configuré de façon à exécuter les fonctions de l'une quelconque des revendications 1 à 6.

16. Une station de base comprenant un appareil selon l'une quelconque des revendications 7 à 12.

FIG 1

## FIG 2

## FIG 3

301 — BASE STATION PRIMARY/SECONDARY CARRIER SELECTOR

303 — PRIMARY CARRIER MONITOR

305 — NEIGHBOURING BASE STATION MONITOR

307 — INTERFERENCE REDUCTION REQUEST GENERATOR

FIG 4

```
┌─────────────────────────┐
│   Base station initiates │ ─── 302
└─────────────────────────┘
            │
            ▼
┌─────────────────────────┐
│   Base station receives  │
│   information on primary │ ─── 304
│   component carrier      │
└─────────────────────────┘
            │
            ▼
┌─────────────────────────┐
│  Base station selects primary │
│      component carrier   │ ─── 306
└─────────────────────────┘
            │
            ▼
┌─────────────────────────┐
│  Base station carries traffic on │ ─── 308
│   primary component carrier │
└─────────────────────────┘
            │
            ▼
         ◇ Degradation in
      quality of primary component  ─── 310
            carrier ◇
            │ Y
            ▼
┌─────────────────────────────────┐
│ Determine/Recover               │
│ 1. Path gain To Neighbouring    │
│    eNB (NeNB)                   │ ─── 312
│ 2. DL Tx Power from NeNB        │
│ 3. NeNB on Component Carrier    │
└─────────────────────────────────┘
```

318

```
┌──────────────────┐         ┌──────────────────────────────┐         ┌──────────────────┐
│ Tx Interference  │    N    │ Determine if any one NeNB    │    Y    │ Tx Interference  │
│ Reduction        │ ◄────── │ interference is > Threshold  │ ──────► │ Reduction        │
│ Request          │         └──────────────────────────────┘         │ Request          │
│ message to       │                       316                        │ message to       │
│ all NeNB         │                                                  │ NeNB >           │
│ on component     │                                                  │ Threshold        │
│ carrier          │                                                  └──────────────────┘
└──────────────────┘
```

317

FIG 5

700

SYSTEM BANDWIDTH

701　703　705　707　709

f

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TR R3.018 V1.0.0,* October 2007